(19) Europäisches Patentamt
European Patent Office
Office européen des brevets

(11) **EP 4 606 637 A2**

(12) **EUROPEAN PATENT APPLICATION**

(43) Date of publication:
**27.08.2025 Bulletin 2025/35**

(21) Application number: **25156658.4**

(22) Date of filing: **07.02.2025**

(51) International Patent Classification (IPC):
**B60L 53/62** (2019.01)    **B60L 53/63** (2019.01)
**B60L 53/67** (2019.01)    **G06Q 50/40** (2024.01)
**H02J 7/00** (2006.01)

(52) Cooperative Patent Classification (CPC):
**B60L 53/62; B60L 53/63; B60L 53/67; G06Q 50/40;
H02J 7/0013;** B60L 58/12; B60L 58/16;
B60L 2240/545; H02J 2310/48

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.02.2024 US 202463555866 P
30.01.2025 US 202519041980**

(71) Applicant: **Cummins, Inc.
Columbus, Indiana 47201 (US)**

(72) Inventors:
• **BORHAN, Hoseinali
Indiana, 47201 (US)**
• **KOLHOUSE, Steven
Indiana, 47201 (US)**
• **NUGROHO, Sebastian
Indiana, 47201 (US)**

(74) Representative: **Cleveland Scott York
5 Norwich Street
London EC4A 1DR (GB)**

(54) **FLEET DEPOT CHARGING SYSTEMS AND METHODS**

(57)    Systems and methods for charging fleets of equipment are provided. A provider computing system includes at least one processing circuit that performs operations including receiving an equipment charging request from a piece of equipment; receiving data regarding the piece of equipment; receiving at least one fleet priority value associated with a fleet of equipment, the fleet of equipment including the piece of equipment; determining a charging parameter for the piece of equipment based on the data regarding the piece of equipment and the at least one fleet priority value; receiving an indication of a charging connection between the piece of equipment and a charger at the equipment charging depot; receiving information via the charging connection subsequent to the indication; and adjusting the charging parameter based on the received information via the charging connection.

FIG. 1

EP 4 606 637 A2

**Description**

CROSS-REFERENCE TO RELATED APPLICATION

This application claims the benefit and priority to U.S. Provisional Application No. 63/555,866, filed February 20, 2024, which is incorporated herein by reference in its entirety.

TECHNICAL FIELD

The present application relates generally to the field of vehicle charging. More specifically, the present application relates to systems, methods, and computer-readable media for optimizing and improving vehicle charging infrastructure operations.

BACKGROUND

Electric vehicles and hybrid electric vehicles such as cars, buses, vans, and trucks use batteries that are designed with a high ampere-hour capacity to give the vehicles power over periods of time. Typically, Lithium-ion battery cells are used. The useful life of a vehicle battery depends at least partially on how the battery is charged. There is a risk that the battery could fail while in service, or need to be replaced, based on various conditions. Effectively managing charging of vehicle batteries is desirable to prolong life of the batteries.

SUMMARY

One embodiment of the present disclosure relates to a provider computing system that is structured to determine and implement equipment charging schedules. The provider computing system comprising at least one processing circuit comprising at least one memory coupled to at least one processor, the at least one processing circuit coupled to an equipment charging depot includes a plurality of equipment chargers, wherein the at least one memory stores instructions therein that, when executed by the at least one processor, causes the at least one processing circuit to perform operations that include receiving an equipment charging request from a piece of equipment and receiving data regarding the piece of equipment. The data regarding the piece of equipment is received from at least one of the piece of the equipment or a computing system associated with the equipment charging depot. The operations may also include receiving at least one fleet priority value associated with a fleet of equipment, the fleet of equipment including the piece of equipment and determining a charging parameter for the piece of equipment based on the data regarding the piece of equipment and the at least one fleet priority value. The operations may further include receiving an indication of a charging connection between the piece of equipment and a charger at the equipment charging depot, receiving information via the charging connection subsequent to the indication, and adjusting the charging parameter based on the received information via the charging connection.

In some embodiments, the data regarding the piece of equipment includes at least one of: battery capacity, battery size, battery health data, a battery charge rate, a battery type, or a battery temperature. In some embodiments, the provider computing system assesses at least one of the battery health data, the battery type, or the battery temperature, determines a temperature threshold for a battery of the piece of equipment based on the at least one of the battery health data, the battery type, or the battery temperature, and operates the charger of the equipment charging depot control to pause a charging of the battery of the piece of equipment in response to a temperature of the battery of the piece of equipment being greater than or equal to the temperature threshold for the vehicle battery. The provider computing system may also operate the equipment charging depot to resume charging in response to the temperature of the battery of the piece of equipment in response to the temperature of the battery of the piece of equipment being below the temperature threshold. In some embodiments, the charging parameter may be tracked to form a charging power profile.

Another embodiment relates to a system for charging vehicle fleets, including a plurality of chargers communicatively coupled to a network and a controller including one or more processors and one or more memory devices storing instructions that, when executed by the one or more processors, cause the one or more processors to perform operations. The operations include receiving a charging request from a fleet of vehicles; receiving data regarding the fleet of vehicles via the network; receiving, from at least one temperature sensor via the network, an ambient temperature associated with the plurality of chargers; receiving fleet management data that includes at least one charging priority via the network; and receiving, from a power grid utilized by the plurality of chargers, a maximum power demand for the power grid. The operations further include determining a charging schedule for the fleet of vehicles based on the maximum power demand, the at least one charging priority, and the ambient temperature, and communicating a charging time and a charging duration to each vehicle of the fleet of vehicles based on the determined charging schedule. The provider computing system may then operate a charger of the plurality of chargers according to the charging time and the charging duration specific to each vehicle in the fleet of vehicles.

In some embodiments, at least one charging priority for fleet vehicle charging is based on at least one of a route for each vehicle in the fleet of vehicles or a scheduled departure time for each vehicle in the fleet of vehicles from an area associated with the plurality of chargers. In some embodiments, the vehicle in the fleet of vehicles with a longest route relative to other vehicles in the fleet of vehicles is scheduled for a longer charging time than vehicles with a shorter route. In some embodiments, the determined charging schedule for the fleet of vehicles includes at least one vehicle scheduled to be charged to a value less than a maximum charge value of the vehicle. In some embodiments, the charging request further comprises a charging time window and a minimum end state of charge value.

In some embodiments, the one or more memory devices store instructions that, when executed by the one or more processors, cause the one or more processors to perform operations including, receiving, from the power grid utilized by the plurality of chargers, a total power available to the plurality of chargers. In some embodiments, the one or more memory devices store instructions that, when executed by the one or more processors, cause the one or more processors to perform operations including, receiving, from the power grid utilized by the plurality of chargers, a regulation signal that includes a maximum power grid capacity.

Yet another embodiment relates to a method for generating and implementing a charging schedule for a fleet of vehicles. The method includes: receiving a charging request from a the fleet of vehicles; receiving data regarding battery data associated with batteries of the fleet of vehicles; receiving fleet management data that includes at least one charging priority associated with a the fleet of vehicles; determining a charging schedule for the fleet of vehicles based on the battery data and the at least one charging priority, the charging schedule including a charging assignment for each vehicle in the fleet of vehicles; transmitting the charging assignment to the fleet of vehicles; and transmitting a control signal to a charging depot to operate a plurality of chargers according to the charging schedule.

Numerous specific details are provided to impart a thorough understanding of embodiments of the subject matter of the present disclosure. The described features of the subject matter of the present disclosure may be combined in any suitable manner in one or more embodiments and/or implementations. In this regard, one or more features of an aspect of the invention may be combined with one or more features of a different aspect of the invention. Moreover, additional features may be recognized in certain embodiments and/or implementations that may not be present in all embodiments or implementations.

BRIEF DESCRIPTION OF THE DRAWINGS

The disclosure will become more fully understood from the following detailed description, taken in conjunction with the accompanying figures, wherein like reference numerals refer to like elements, in which:

FIG. 1 is a block diagram of a system for management at vehicle charging depots, according to an exemplary embodiment;

FIG. 2 is a block diagram of FIG. 1, according to an exemplary embodiment;

FIG. 3 is a schematic of scheduling vehicles for charging with the systems of FIG. 1 and FIG. 2, according to an exemplary embodiment;

FIG. 4 is a flow chart of a method for charging vehicles based on their battery temperature, according to an exemplary embodiment; and

FIG. 5 is a flowchart of a method for scheduling fleet vehicle charging, according to exemplary embodiments.

DETAILED DESCRIPTION

Following below are more detailed descriptions of various concepts related to, and implementations of methods, apparatuses, and systems for scheduling vehicle charging at a charging depot. The various concepts introduced herein may be implemented in any number of ways, as the concepts described are not limited to any particular manner of implementation. Examples of specific implementations and applications are provided primarily for illustrative purposes.

Referring to the FIGURES generally, the various embodiments disclosed herein relate to systems, apparatuses, and methods for scheduling charging within a vehicle charging depot. Technically and beneficially, the systems, methods, and apparatuses described herein provide an improved charging system that utilizes vehicle data, ambient temperature data, power grid data, and/or fleet management data to determine a vehicle charging schedule for a plurality of vehicles. Additionally, and as described herein, at least one of battery size, battery capacity, battery health, battery type, battery charging rates, ambient temperatures over the course of a day, vehicle routes, or depot departure time are used by a provider individually and/or in combination with each other to create a depot charging schedule. Furthermore, the systems, methods, and apparatuses described herein provide a technical solution to the technical problem of vehicle charging causing an overdraw of power from a power grid. Similarly, the provider may regulate the total power consumption at the charging depot based on one or more regulation signals received from the power grid operator to maintain balance in the power grid. The one or more regulation signals may define a total amount of power consumption at the charging depot for a given time and/or duration (or other operating period).

Conventionally, high traffic charging infrastructures often assign chargers in the order that the charging requests are received. This may lead to an overdraw on the electric grid that the charging infrastructure utilizes, which affects operation costs and charging efficiencies. This assignment method also may reduce the number of vehicles that can charge in a certain period of time (e.g., one day). Advantageously the present disclosure provides techniques for creating a charging assignment schedule that maximizes the number of vehicles that can charge at a charging infrastructure (e.g., a depot) in a day. The present disclosure provides charging techniques that help extend the life of a battery in a vehicle, or the batteries in a fleet of vehicles.

As described herein, a system may include a depot, at least one vehicle, and a provider entity/institution (also referred to as "provider") that are communicatively coupled to each other via a network. The depot may contain at least one charger, and in a particular a plurality of chargers, with individual controllers and processing circuitry thereon. In exemplary embodiments, the vehicle contains a battery management system that acquires battery data of the battery(ies) on-board the vehicle. The vehicle may communicate the battery data to the provider via a charger in the depot, or directly through a communication interface over the network. The provider may comprise a computing system with at least one processing circuit and at least one database. The database may store fleet management data, weather data, pricing data, or other data pertinent to charging efficiency. The provider may be communicatively coupled to the depot and/or the vehicle via the network. In this way, the provider may assess the battery data of the vehicle and at least one priority of a vehicle fleet including the vehicle to create a charging schedule for the depot. By assessing a variety of factors, the provider may create a vehicle charging schedule that allows the depot to operate its chargers relatively more efficiently.

For example, if the determined charging time required to reach full charge is less than the time the total charging time the depot has available based on the cumulative charging demand on the depot, and the charging cost is acceptable to the vehicle operator and/or fleet manager, then the provider computing system may schedule the vehicles in the fleet to charge to their respective defined charge levels (e.g., full charge, a value less than full charge, etc.). The provider computing system may determine or estimate a charging duration for each vehicle in the fleet based on the battery health of each vehicle and the ambient temperature, thus creating a more accurate schedule. For example, if a battery is lithium-ion battery that is severely aged then it may require a longer charging duration than a new lithium-ion battery. The traditional charging depot or provider scheduler may create a schedule for charging based on standard charge time for a lithium-ion battery, which results in delays to the schedule when an aged battery that requires a longer charging time connects to a depot charger. Further, the provider of the present disclosure may account for the capacity of the electric grid by assigning offset charging times of vehicles so that no more than a certain number of vehicles can charge at one time. These and other features and benefits are described more fully herein below.

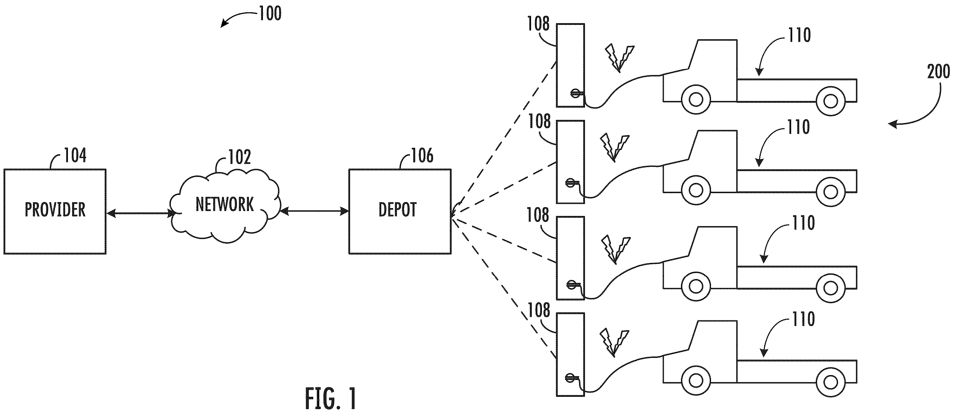

Referring to FIG. 1, a block diagram of a system 100 for managing vehicle charging at least one charging depot is shown, according to an exemplary embodiment. As shown in FIG. 1, the system 100 includes a network 102, a provider 104, a depot 106 having one or more chargers 108, and a fleet 200 having one or more vehicles 110.

The provider or provider 104 institution/entity is a service and/or system/component provider (e.g., an engine manufacturer for the engine of the vehicle 110, a vehicle manufacturer, a fleet operator, an exhaust aftertreatment system manufacturer, etc.). In the example shown, provider is associated with, and particularly controls or operates, the provider computing system. The provider computing system is a remote computing system relative to the vehicle 110, the fleet 200, and the depot 106. Accordingly, an employee or other operator associated with the service and/or system/component provider may operate the provider computing system. The provider computing system 400 may be structured to determine a charging schedule and assign the vehicles 110 to a charger for a specific time and/or charging duration. In some embodiments, the provider computing system 400 may establish a charging power profile corresponding with each or at least one vehicle 110 that connects to a charger at the depot 106. This information may be saved by the provider computing system 400 on a database. The charging power profile corresponding with a vehicle 110 may include the vehicle's battery size, battery capacity, battery type, charging rate, historical battery health data, vehicle mission routes, and the like. The battery size may vary according to the size of the electric vehicle (e.g. 20kWh-100kWh). For example, a compact electric vehicle may contain a 20 kWh sized battery, whereas a large/industrial electric vehicle may contain a 100 kWh sized battery. The battery capacity may be the total amount of electricity that can be generated in a battery (e.g. 5Ah).

Thus, the charging power profile represents a specific representation of the battery(ies) for each vehicle, which may be used in the future to control charging schemes for each vehicle. The charging profile represents tracked charging parameters over a predefined amount of time. The charging parameter may be charging time, minimum ending state of charge, battery temperature variations over the course of a charge, ambient temperature data, charge rate, and the like. The charging power profile may be accessed and updated by the provider computing system 400 each time new vehicle data and/or battery data is transmitted to the provider 104. The depot 106 and the provider 104 may be at the same location, or different locations. The provider 104, via the provider computing system 400, may provide charger assignment and scheduling to the depot 106 as a service. Additionally, the provider may monitor depot performance and identify usage patterns to optimize the performance of the depot as a charging infrastructure.

The network 102 may be any type of wireless network, such as a local network, a wide area network, the Internet, a cellular network or any other appropriate type of network. In some examples, the network includes wired connection points that enable the vehicle 110 to connect to the network (e.g., a data cable may be used to couple the vehicle 110 to a charger 108 at the depot 106). The systems and components described herein may communicate via any combination of wired and/or wireless networks (e.g. a cellular network, the Internet, Wi-Fi, Wi-Max, a proprietary provider network, a proprietary service provider network, and/or any other kind of wireless and/or wired network). In operation, the network 102 facilitates communication of data between the depot 106 and other computing systems associated with a service provider (e.g. provider 104) or with a customer or business partner of the service provider.

The depot 106 is a physical infrastructure that includes one or more chargers 108 for charging the vehicles 110, from an electrical grid. Thus, the depot 106 may include various amenities in addition to the chargers (e.g., a convenience store, a grocery store, etc.). The one or more chargers 108 may be used to charge batteries of a piece of equipment and, particularly, at least partially electric vehicles. The one or more chargers 108 may be any suitable charger. The one or more charger 108 may also include a communication interface and at least one processing circuit. The communication interface may enable communication with a depot computing system associated with the depot 106, with the provider computing system 400 directly, and/or with the vehicle 110. The communication interface may be or include any combination of wired and/or wired interfaces. The charging depot may be connected to the provider computing system associated with the provider 104 that enables remote monitoring and maintenance of the depot 106. The depot 106 may be associated with the provider 104 or may be a third party that utilizes the provider's services.

Each vehicle 110 connecting to a charger 108 at the depot 106 may be an at least partially electric vehicle (e.g., a full electric vehicle, a hybrid electric vehicle, etc.), and may comprise at least one electric machine (e.g., an electric traction motor) powered by one or more battery packs. The vehicle 110 may be an on-road or an off-road vehicle including, but not limited to, line-haul trucks, mid-range trucks (e.g., pick-up trucks), etc.

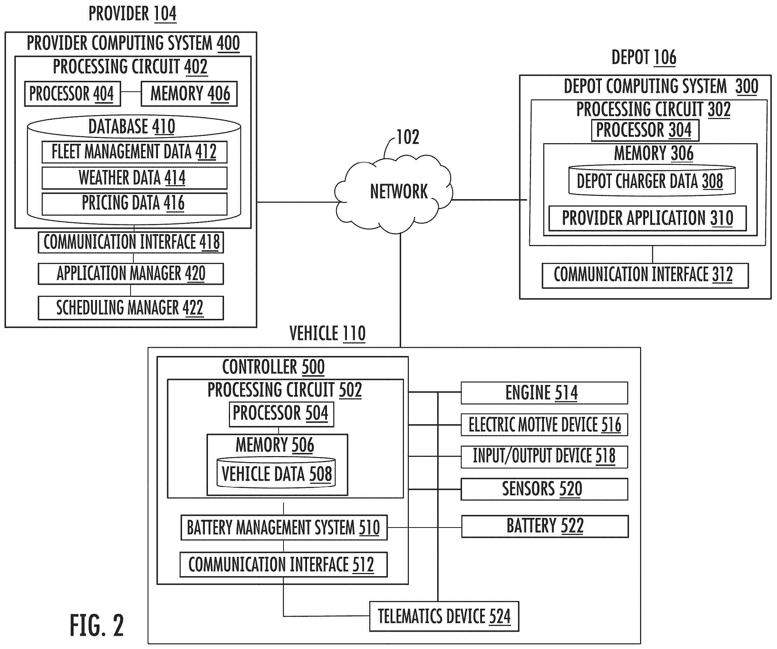

Referring now to FIG. 2, a block diagram of the components of the system 100 or components thereof is shown, according to an example embodiment.

The vehicle 110 is shown to include a vehicle controller 500. The vehicle controller 500 may be structured as one or more vehicle controllers/control systems, such as one or more electronic control units. The vehicle controller 500 may be separate from or included with at least one of a transmission control unit, an exhaust aftertreatment control unit, a powertrain control module, an electric motive control module or unit, or other vehicle controllers. In one embodiment, the components of the vehicle controller 500 are combined into a single unit. In another embodiment, one or more of the components may be geographically dispersed throughout the system or vehicle. In this regard, various components of the vehicle controller 500 may be dispersed in separate physical locations of the vehicle 110. All such variations are intended to fall within the scope of the disclosure.

The vehicle controller 500 includes at least one processing circuit 502. The processing circuit 502 contains one or more specialized processing circuits and/ or control units shown as a battery management system 510. The specialized control units may include an electronic control unit and a controller area network in addition to a battery management system. The processing circuitry further contains a memory 506. The vehicle controller 500 further includes a communication interface 512.

The memory 506 may store vehicle data 508. This includes information associated with each of the components of the vehicle 110 (e.g. an electric motive device 516, an I/O device 518, sensors 520, the battery 522, an engine 514). The information about the one or more vehicles 110 includes vehicle data 508. For example, the vehicle data 508 includes vehicle route plans and depot departure time. The vehicle data 508 also includes vehicle operational data, such as powertrain information (e.g., a battery state of charge, a battery consumption rate, a total battery charge consumption rate over a predetermined time or distance, etc.). The vehicle data 508 may also include a powertrain serial number, a vehicle identification number (VIN), a calibration identification and/or verification number, a make of the vehicle, a model of the vehicle, a unit number of a power unit of the vehicle, a unique identifier regarding a controller of the vehicle (e.g., a unique identification value (UID)), and/or a vehicle maintenance history.

The vehicle 110 further includes specialized circuitry, shown as battery management system 510. The battery management system 510 may be configured to track the health of the battery 522. The battery management system may be further configured to estimate the battery's operational state and charge level. In some embodiments, the battery management system is configured to optimize the performance of battery 522. To optimize the battery performance, The battery management system 510 uses and particularly analyzes battery data. Battery data is data regarding the battery 522 and may include, but is not limited to, a battery temperature, battery age, battery use patterns, historical battery data, battery capacity, etc.

The battery management system 510 may receive remote instructions via a telematics device 524 or directly through the vehicle controller 500. The remote instructions may prescribe and control reference set points for the battery 522 (e.g., a nominal state of charge (SOC), a minimum SOC, a maximum SOC, etc.) based on, e.g., weather, a vehicle history, a power grid status and pricing (e.g., a location of charging nodes on the power grid, a rate (e.g., a price, a cost per unit, etc.) of electrical energy at each node or a subset of nodes because pricing may differ from node-to-node), etc. Advantageously, this capability may be utilized to improve fleet charging management.

In an exemplary embodiment, the communication interface 512 is structured to receive information from one or more vehicles 110 (e.g., via the network 102), and provide the information to the components of the vehicle controller 500. The communication interface 512 is also structured to transmit data from the components of the vehicle controller 500 to the one or more vehicles 110. The communication interface 512 is structured to exchange data, communications, instructions, and the like with an input/output device 518 of the components of the vehicle 110.

In one embodiment, the vehicle 110 includes a telematics device 524. In some embodiments, the telematics device 524 may communicatively couple to the vehicle controller 500. In some embodiments, one or more of the sensors 520 may be embodied in the telematics device 524. For example, the telematics device 524 may include, but is not limited to, a location positioning system (e.g., GPS, GNSS, etc.) to track the location of the vehicle (e.g., latitude and longitude data, elevation data, etc.), one or more memory devices for storing the tracked data, and one or more electronic processing units for processing the tracked data. In some embodiments, the telematics device 524 is coupled to a communication interface 512 for facilitating the exchange of data between the telematics unit and one or more remote devices (e.g., provider 104 or provider computing system 400, depot 106 or depot computing system 300 etc.). For example, the communication interface 512 may be structured to communicatively couple the telematics device 524 with the vehicle controller 500. In this regard, the communication interface 512 may be configured as any type of mobile communication interface or protocol including, but not limited to, Wi-Fi, WiMAX, Internet, Radio, Bluetooth, ZigBee, satellite, radio, Cellular, GSM, GPRS, LTE, and the like. In other embodiments, the telematics device 524 may be excluded and the vehicle controller 500 may couple directly to the network 102 (e.g., via wired and/or wireless connections) and exchange information directly without the intermediary of telematics device 524.

The communication interface 512 may include any type and number of wired and wireless protocols (e.g., any standard under IEEE 802, etc.). For example, a wired connection may include a serial cable, a fiber optic cable, an SAE J1939 bus, a CAT5 cable, or any other form of wired connection. In comparison, a wireless connection may include the Internet, Wi-Fi, Bluetooth, ZigBee, cellular, radio, etc. In one embodiment, a controller area network (CAN) bus including any number of wired and wireless connections provides the exchange of signals, information, and/or data between the vehicle controller 500, the telematics device 524, and the communication interface 512. In still another embodiment, the communication between the components of the vehicle 110 (e.g., the vehicle controller 500, telematics device 524, and the communication interface 512) is via the unified diagnostic services (UDS) protocol.

As alluded above, the vehicle controller 500 may be structured to include the entirety of the communication interface 512 or include only a portion of the communication interface 512. In these latter embodiments, the communication interface 512 is communicatively coupled to the processing circuit 502. In other embodiments, the vehicle controller 500 is substantially separate from the communication interface 512. For example, the vehicle controller 500 and the communication interface 512 are separate control systems but may be communicatively and/or operatively coupled. Furthermore, the communication interface 512 may work together or in tandem with the telematics device 524 in order to communicate with other vehicles in the fleet 200 of one or more vehicles 110.

In some embodiments, the functionality of the vehicle controller 500 may be split between the vehicle controller 500, the telematics device 524, and/or other components of the vehicle 110. All such variations are intended to fall within the scope of the disclosure.

The vehicle 110 includes a sensor array that includes a plurality of sensors, shown as sensors 520. The sensors are coupled to the vehicle controller 500, such that the vehicle controller 500 can monitor, receive, and/or acquire data indicative of operation of the vehicle 110 (which may be referred to as operational data associated with the vehicle, operational parameters, and similar terms herein). In this regard, the sensors 520 may include one or more physical (real) or virtual sensors. In some embodiments, the sensors 520 may include temperature sensors. The temperature sensors acquire data indicative of or, if virtual, determine an approximate temperature of various components or systems at or approximately at the disposed location(s) of the sensors 520. In an exemplary embodiment, one or more temperature sensors are disposed on the battery or proximate to the battery to measure battery temperature. The battery temperature measurements by the sensors 520 are transmitted to the battery management system 510, according to exemplary embodiments.

The sensors 520 may include a battery level sensor that determines a level of charge in the vehicle 110, such that a fuel economy may be determined based on the speed of the vehicle relative to the charge consumed by the electric motive device 516 (i.e., to determine a distance-per-unit of fuel consumed, such as miles-per-kWh or kilometers-per-kWh, etc.). The sensors 520 may include a battery sensor that determines a state-of-charge of one or more batteries of the vehicle 110, such that the vehicle controller 500 may determine a distance-per-unit of battery charge consumed. Based on the foregoing, the vehicle controller 500 may determine a fuel economy for the vehicle 110 which may be provided to the operator via the Input/output device 518 (i.e., I/O device 518).

The vehicle 110 may also include an operator input/output (I/O) device 518. The I/O device 518 may be coupled to the vehicle controller 500, such that information may be exchanged between the vehicle controller 500 and the I/O device 518, where the information may relate to one or more components of the vehicle 110 and one or more determinations of the vehicle controller 500. The I/O device 518 enables an operator of the vehicle 110 to communicate with the vehicle controller 500 and one or more components of the vehicle 110 of FIG. 1. For example, the input/output device 518 may include, but is not limited to, an interactive display, a touchscreen device, one or more buttons and switches, voice command receivers, etc. In this way, the input/output device 518 may provide one or more indications or notifications to an operator, such as a malfunction indicator lamp (MIL), etc.

The vehicles 110 includes an electric motive device 516 (also referred to as an electric machine herein), according to exemplary embodiments. The electric motive device 516 is operably coupled to a drivetrain. The electric motive device 516 may be an electric motor, a motor-generator, an alternator, or another electric power device. The electric motive device 516 includes a motor portion configured to produce mechanical energy. In some embodiments, such as when the electric motive device is a motor-generator, the electric motive device includes a distinct motor and a distinct generator, coupled together. The motor coils of the distinct motor and generator coils of the distinct generator may be wound around a single rotor or may be wound around separate rotors.

The electric motive device 516 is electrically coupled to a battery 522. The battery 522 is a power source (e.g., lead-acid, Li-Ion, Li-Po, etc. (also referred herein as "battery type")) configured to provide the electric motive device 516 with electrical power. In some embodiments, the battery 522 is the main vehicle battery (e.g., used for starting the engine 514, used for operating certain vehicle systems/components when the engine 514 is not operating, etc.). In some embodiments, such as when the electric motive device 516 includes a generator portion, the generator portion of the electric motive device 114 may be configured to provide the battery 522 with electric power, which the battery 522 may then store. The electric motive device 516 converts the electrical power provided by the battery 522 into mechanical energy (e.g., rotational energy) in the drivetrain, providing the drivetrain with supplemental power. It should be understood that other power providing devices for the electric motive device are contemplated herein (e.g., ultra-capacitors, etc.). The electric motive device 516 may be operated at various levels and loads/power outputs (e.g., 0%, 10%, 20%, 50%, 70%, 100%, etc.) of the maximum rated load of the electric motive device 516.

Referring still to FIG. 2, the depot 106 is shown to include a depot computing system 300. The depot computing system 300 is shown to at least one processing circuit 302 having at least one processor 304 coupled to at least one memory device 306 thereon. The memory 306 may store depot charger data 308 and a provider application 310 thereon. Depot charger data 308 may include charger availability, charger schedules, charger maintenance information, energy grid information, etc. The depot computing system 300 further includes a communication interface 312 that is communicatively coupled with the network 102. In some embodiments, the communication interface 312 is structured to exchange data, communications, instructions, and the like directly with the provider 104 and/or the vehicle 110.

The depot computing system 300 may be configured to store one or more applications (e.g., provider application 310) and/or executables to facilitate tracking data (e.g., battery data, vehicle data, fleet data, and/or user device data), managing real-time incoming data, generating or updating statistical models (e.g., machine learning models), or any other operation described herein. In some arrangements, the applications and/or executables are incorporated with an existing application (e.g., provider application 310) in use by the depot 106. In some arrangements, the applications and executables are separate software applications implemented on the depot computing system 300. The applications and executables may be downloaded by the depot computing system 300 prior to their usage, hard-coded into the memory 306 of the processing circuit 302, or be a network-based or web-based interface application, such that the vehicle 110 provides a web browser to access the application, which may be executed remotely from the vehicle 110 (e.g., by a user device). Accordingly, the vehicle 110 includes software and/or hardware capable of implementing a network-based or web-based application. For example, in some instances, the applications and/or executables include software, such as HTML, XML, WML, SGML, PHP (Hypertext Preprocessor), CGI, and like languages. The applications and executables or updates thereto may be generated by the provider computing system 400 and transmitted to the depot computing system 300, according to exemplary embodiments.

In an exemplary embodiment, the communication interface 312 is structured to receive information from one or more vehicles 110 (e.g., via the network 102, via the charger 108) and provide the information to the depot computing system 300. The communication interface 512 is also structured to transmit data from the components of the depot computing system 300 to the one or more vehicles 110.

The communication interface 312 is structured to exchange data, communications, instructions, and the like with the communication interface 512 of the vehicle 110. The data exchanged may include battery state of charge, battery age, battery health data, and other battery data for vehicle 110 from battery management system 510. Electric vehicle and hybrid vehicle batteries degrade over time, which causes the batteries to lose charge capacity over time, which results in battery health data having lower values. For example, a new lithium-ion battery operates at 100% capacity and performs at the standard milage range the battery is rated for (e.g. 300 miles of range per full charge), this battery's battery health data would be associated with a high value. However, a five-year-old lithium-ion battery that has been exposed to extreme temperatures and consistently charged with a fast charger may operate at 90% capacity and perform at less than the standard milage range the battery is rated for (e.g. 270 miles per full charge). In the first example, the new lithium-ion battery has a higher state of battery health than the five year old Lithium Ion battery.

Referring still to FIG. 2, the provider 104 is shown to include a provider computing system 400. The provider computing system 400 contains a processing circuit 402 with one or more specialized circuits thereon. The specialized circuits are referred to herein and shown as an application manager 420 and a scheduling manager 422. The provider computing system 400 is a remote computing system relative to the vehicle 110, the fleet 200, and the depot 106. Accordingly as used herein, "remote computing system," "cloud computing system," and "provider" are interchangeably used to refer to a computing or data processing system that has terminals distant from the central processing unit (e.g., processing circuit 402) from which users and/or other computing systems (e.g., the computing/control systems of the vehicle 110) communicate with the central processing unit. In some embodiments, the provider computing system 400 is part of a larger computing system, such as a multi-purpose server or other multi-purpose computing system.

The processing circuit 402 may store a database 410, according to some arrangements (alternatively, the database may be stored on the memory 406). The database retrievably stores data associated with operating the depot 106. In exemplary embodiments, the database 410 retrievably stores fleet management data 412, weather data 414, and pricing data 416.

Fleet management data 412 may include what time vehicles 110 are needed for fleet tasks, which vehicles 110 are preferred to take charging priority, vehicle route plans, vehicle departure times, etc. The provider computing system 400 may receive data inputs from multiple fleets 200. In this way, fleet management data 412 is used by the provider 104 to manage scheduling for vehicles 110 from a variety of fleets 200.

Weather data 414 may be transmitted to the provider 104 by temperature sensors at the depot 106 and/or by third parties (e.g., a local weather service, national weather service, etc.). The weather data 414 is used by a scheduling manager 422 to determine charging duration and charging time period based on ambient temperature. For example, in cold temperatures (e.g. >32°F) a battery loses charge faster and takes longer to charge. Therefore, in cold temperatures, a vehicle is scheduled to charge for longer durations.

The provider computing system 400 may receive pricing data 416 (e.g., dollars per kWh) set by a local utility provider from the network 102. The provider computing system 400 may further receive the total available power to the depot 106 from a local utility provider via the network 102. The total available power may be utilized by the provider computing system 400 in setting charging costs or fees for charging at the depot 106. In some embodiments, the provider 104 collects pricing data, such as budgets, from a fleet manager or operator as fleet management data 412. The provider 104 may then allocate the budget amongst each vehicle 110 in a fleet 200 and convey the maximum budgetary values to the depot 106. In this way, the depot 106 may operate the chargers 108 according to the allocated budget to each vehicle 110 in a fleet 200.

The database 410 is configured to determine pricing for charging at the depot 106 based on the pricing data 416, according to exemplary embodiments. The provider 104 may dynamically adjust the cost of charging based on changes in electricity cost. In some embodiments, the provider 104 uses a cumulative charging demand and a required charging time equation (discussed further below) to adjust the cost of charging for a vehicle 110. For example, if the total required charging time by requesting vehicles and/or fleets is less than the charging time available at the depot 106, then the pricing data 416 may be used by the provider computing system 400 to raise charging costs until the charging demand is less than the charging supply. In alternative embodiments, provider computing system 400 may allow users and/or fleet managers to bid on chargers 108 and charging times (e.g., timeslots, durations, etc.). In other embodiments, the provider 104 may offer rate discounts in return for a user and/or fleet manager delaying their charging request to a different time slot than requested. The provider computing system 400 may decrease charging traffic by increasing prices when the total available power to the depot 106 is below a predefined available power threshold. Technically and beneficially, this allows the provider 104 to balance the charging demand with the total available power provided by the utility provider.

The provider computing system 400 may compile collected data (e.g., vehicle data 508, fleet management data 412, weather data 414, pricing data 416, etc.) in the database 410 and determine trends. The provider computing system 400 may use the compiled data and data trends to create updates to application software, such as the provider application 310, or to create new software. The provider computing system 400 may transmit software updates and new software via the network 102 to the vehicle controller 500 and/or the depot computing system 300.

The database 410 may store battery health data associated with the vehicle battery 522 over time. The provider computing system 400 may calculate battery health trends, create a recommendation, and transmit the recommendation to a vehicle user, fleet manager, and/or fleet operator. For example, the database 410 may store a collection of total charging capacity values of a vehicle battery over the course of a year. If the provider computing system 400 finds that the total battery charging capacity decreased drastically during the winter months, the provider computing system 400 may transmit a recommendation to the vehicle controller 500 and/or to the depot computing system 300 that a battery warmer be installed.

In some embodiments, the provider computing system 400 may track charging rates and charging frequency of a fleet 200. The provider 104 may transmit the compiled fleet charging rates and charging frequency and/or corresponding trends to fleet owners via the communication interface 418 and/or the network 102. In an exemplary embodiment, the database 410 may compile collected data to generate a battery model (e.g., a digital twin, a predictive model, etc.) to predict the impact of ambient temperature values and charging behavior on the health of the battery. Battery-specific data and battery modeling data may be stored in a charging profile. In this way, the battery model may be developed over time as the vehicle 110 transmits more data to the provider computing system 400 (e.g., upon/subsequent to connecting to a charger 108, by transmitting data according to predetermined intervals, etc.). For example, a vehicle 110 may connect to the charging depot to charge X times in one month. The depot computing system 300 may transmit collected data to the provider computing system 400 , which is stored on database 410 in each of the X times. Each data set collected on a charge connection may be used to further develop the battery model, and more accurately estimate the impact of ambient temperature on the battery 522, and of charging behavior of associated with the battery 522 over time.

The data collected and stored in the database 410 is used by the application manager 420 to create updates to the provider application 310, according to exemplary embodiments. The provider application 310 updates may be transmitted by the provider 104 to the depot 106 via the network 102. In alternative embodiments, the communication interface 418 may directly transmit the provider application 310 updates to the depot computing system 300.

As briefly described above, in some embodiments, the provider computing system 400 is structured to receive data from the one or more vehicles 110 and, via the communication interface 512 and/or via the network 102. In some embodiments, the scheduling manager 422 identifies, selects, and determines a vehicle charging schedule based on the following scheduling factors: SOC, battery type, battery age, ambient temperature, and fleet priorities. Each factor may be considered by the scheduling manager 422, individually and/or collectively. For example, the scheduling manager 422 may receive a request to charge the battery 522 of vehicle 110 to a given SOC. The scheduling manager 422 receives one or more requests to charge during a day. The scheduling manager 422 may select a vehicle 110 from the fleet 200 for each of the one or more requests and assign the vehicle 110 a charging time slot and charging duration. The scheduling manager 422 may select the vehicle 110, based on the scheduling factors (e.g., the SOC, battery type, battery age, ambient temperature, and fleet priorities).

The scheduling manager 422 calculates the charging demand, based on vehicle charging requests and cumulative required charging time when creating a charging schedule, according to an example embodiment. First the fleet cumulative and average SOC are calculated by:

$$Cumulative\ Fleet\ SOC = \sum (SOC_1 + SOC_2 + SOC_3 + \cdots SOC_N)$$

$$Average\ Fleet\ SOC = \frac{\sum (SOC_1 + SOC_2 + SOC_3 + \cdots SOC_N)}{N}$$

The cumulative charging demand is then determined by:

$$Charging\ Demand = (N) * (Full\ Charge - Average\ Fleet\ SoC)$$

The charging demand represents the entire demand of all charging requests on depot 106. The variable (N) represents the number of chargers 108 in a depot 106. (N) is multiplied by the difference between a full charge value and the fleet's average state of charge. The cumulative charging demand may then be used to determine required charging time:

$$Required\ Charging\ Time = \frac{Charging\ Demand}{Average\ Charging\ Rate}$$

If the determined charging time required is less than the total charging time the depot 106 has available and the charging cost is acceptable (e.g., at or below a predefined threshold), then the vehicles 110 may be scheduled (e.g., by scheduling manager 422) to charge to their respective full charge levels. If the cumulative charging time required to charge vehicles 110 to a full charge is greater than the available time, and the vehicle departure schedules are known (e.g., are received as fleet management data 412), then the vehicles 110 are scheduled based on depot departure times. For example, the vehicle 110 with the earliest depot departure time of the depot charging requests is assigned the earliest available charging time slot. In some embodiments, the average charging rate may be adjusted in response to high charging demand (charging demands that are above a predefined threshold, which may be determined by analyzing the current draw (in the aggregate or individually) from the chargers relative to the threshold). For example, if a depot 106 has a low (e.g., at or below a predetermined threshold) remaining charging capacity and one available charger 108, the charging schedule may be altered to schedule a vehicle 110 to charge at a lower average charging rate for a longer charging time. In this way, the depot 106 may flexibly schedule vehicles demanding charging according to the total power capacity remaining on the electrical grid.

In some embodiments, the charging depot's charging capacity is adjusted by the provider 104 adjusting the total power consumption in the depot 106, based on a regulation signal sent by a grid operator (e.g., a PJM regulation signal). This regulation signal may indicate how much power the depot 106 must consume to maintain balance in the electric grid. The provider 104, in return, may receive competitive electricity rates from the electric grid's utility provider (e.g., discounted rates relative to a standard/preset rate, etc.).

The scheduling manager 422 may assign vehicle charging time and/or duration based on other fleet management data 412, such as what time vehicles 110 are needed for an upcoming fleet task and/or vehicle route data. For example, if the cumulative charging time required is greater than the available charging time at depot 106 and the vehicle route plans are known (e.g., by fleet management data 412), then vehicles 110 are scheduled (e.g., by scheduling manager 422) based on vehicle route plans. In this example, the vehicles 110 with the longest route plans are prioritized for earlier charging or longer charging durations so that they are provided sufficient charge to complete their route. The fleet management data 412 may also include fleet vehicle location data that is regularly transmitted to the scheduling manager 422 (e.g., hourly, semi-hourly, every 5 minutes leading up to an assigned charging time, etc.). In this way, the scheduling manager 422 may rearrange the charging schedule and charging assignments if a vehicle 110 is delayed and cannot make an assigned charging time.

The scheduling manager 422 may assign vehicles to chargers, based on electric grid capacity and the charging capacity of chargers 108. For example, if a depot 106 has ten chargers 108, but the maximum electric grid capacity is reached when eight vehicles 110 are connected to chargers 108 at a time, then the scheduling manager 422 may offset charging assignment times so that no more than eight vehicles are charging at a time. In this way, the scheduling manager 422 may schedule vehicle charging to balance the depot 106 charging capacity and charging demand.

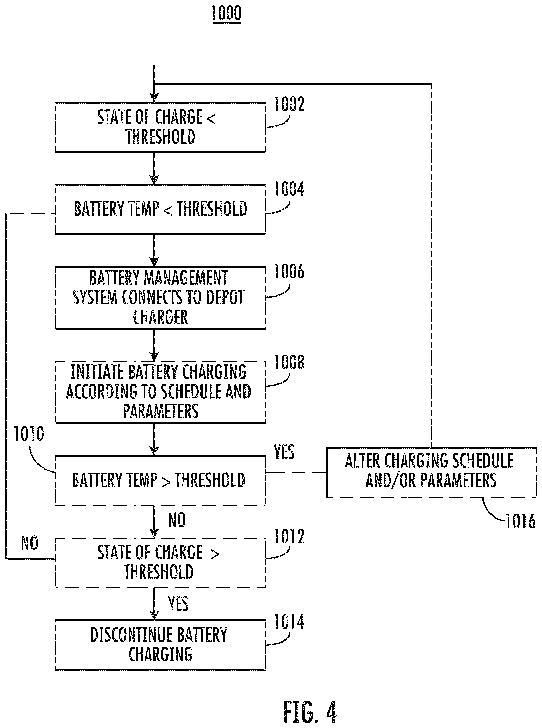

Additionally, the provider 104 may moderate charging at the depot 106 based on battery health conditions of a vehicle 110. For example, if during the charging process the sensed temperature of the battery 522 exceeds a temperature threshold, the charging is paused, and the vehicle is rescheduled110 to continue charging at a later time. In this way, the system 600 optimizes the charging schedule while maximizing battery life. This concept is explained in greater detail in FIG. 4. In some embodiments, the scheduling manager 422 may select a vehicle 110 for charging based on a state of health of the battery 522. In some embodiments, the vehicle 110 with the least healthy battery of the fleet 200 may be scheduled for a longer charge duration at a slower charge rate. For example, a new battery may charge from 40% to 100% in two hours with the standard chargers 108 at the depot 106. The vehicle 110 with the least healthy battery in a fleet 200 may be assigned to charge from 40%-100% with a three-hour charging duration. The vehicle 110 with the least healthy battery may then connect to a charger 108 that delivers power at 80% of its maximum to accommodate the slower rate of charge.

In some embodiments, the scheduling manager may select the vehicle 110 based on a battery type. For example, if a fleet contains vehicles with lithium-ion batteries, those vehicles may be scheduled with shorter durations than fleet vehicles with other types of batteries (e.g., Solid-State batteries, Nickel-Metal Hydride batteries, Aluminum-Ion batteries, etc.). Alternatively, a vehicle with a Solid-State battery may be assigned to a fast charger, while vehicles with lithium-ion batteries may be assigned to a standard charger.

The scheduling manager 422 determines a charge duration for a given vehicle 110, based on weather conditions, such as ambient temperature, according to exemplary embodiments. For example, if the ambient weather is warm e.g., 50-85°F) for charging during the daytime, but will be colder than ideal(e.g., <49°F) charging temperatures in the at night, the charging schedule of the vehicles will be adjusted so that charging durations are longer in the colder night time. This accommodates a slower rate of charge due to colder temperatures.

In additional or alternative embodiments, the scheduling manager 422 may compare the operational parameters of a first vehicle of the fleet 200 with other vehicles of the fleet 200. In some embodiments, the comparison may be made among powertrains of a similar type. In other embodiments, the comparison may be made among all the vehicles of the fleet 200, irrespective of the powertrain type.

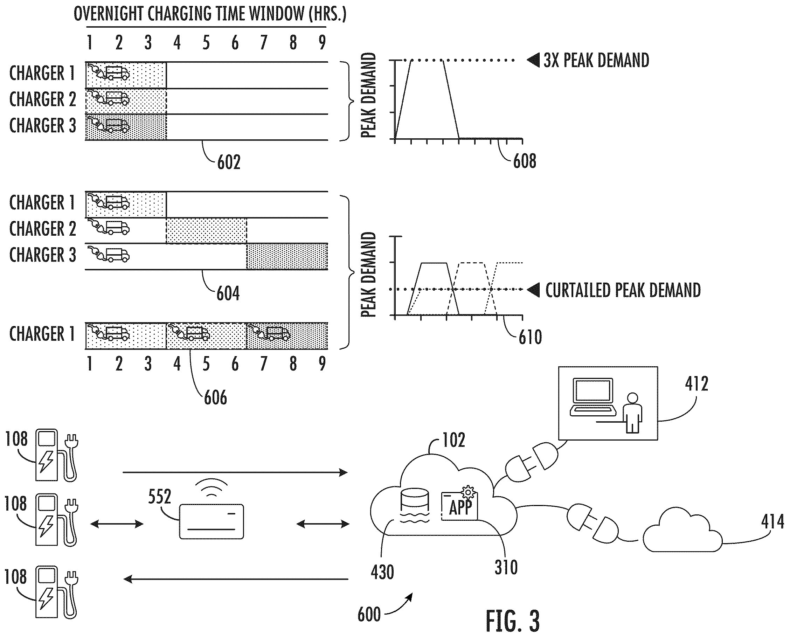

Referring now to FIG. 3, a schematic depot management architecture is shown, according to examples. The provider 104 creates a charging assignment schedule for the depot 106 operation, based on cost and grid capacity and desired charging levels. The graph 602 shows three vehicles 110 charging simultaneously at three separate chargers 108 in the depot 106. The graph 602 shows the corresponding demand on the electric grid when the three vehicles 110 charge at chargers 108 simultaneously. Since all three vehicles are charging at the same time, the electric demand is large relative to a peak demand threshold. As shown more particularly in graph 608, the electric demand of the example in graph 608 is approximately three times the peak electric demand threshold. In this example, the electric grid that depot 106 and chargers 108 utilize may not be able to accommodate such an electric demand. This leads to less efficient vehicle charging and higher depot operation costs (e.g., due to scheduled vehicles being unable to achieve desired charge with available electricity, due to purchasing electricity at peak demand times). In graph 604, the three vehicles 110 are scheduled to charge in offset intervals at three different chargers 108. In another example, the vehicles 110 may charge at the same charger 108 at offset intervals, as shown in graph 606. As shown more particularly in graph 610, in both exemplary embodiments shown in graph 604 and graph 606, the corresponding peak demand is curtailed. This is a more efficient and cost-effective method of operating a depot because the system 600 balances the charging demand with the charging capacity of the depot 106, according to exemplary embodiments. In some embodiments, the electric grid utility provider may send a regulation signal that conveys a maximum power capacity for the depot 106. In this way, the scheduling manager 422 may adjust how many vehicles are charging and/or their average charging rate to maintain a peak electric demand that is lower than the maximum power capacity conveyed in the regulation signal from the local utility provider.

A schematic of the communication between the chargers 108 and the network 102 is further shown in FIG. 3. In an exemplary embodiment, the chargers 108 are coupled with an Internet of Things (IoT) device 552. In this way, the chargers 108 are linked to the network 102 via the IoT device 552. The chargers 108 may communicate with the IoT device 552 using Open Charge Point Protocol (OCPP). In other embodiments, the chargers 108 may communicate with the IoT device 552 using IEC 63110 standards. Both OCPP and IEC 63110 communications accommodate authentication and billing for use of the chargers 108. A user may pay directly on a user device integrated into the charger 108 or by connecting via a mobile device (e.g., a cell phone). Additionally, the OCPP and IEC 63110 communications from the chargers 108 to the IoT device 552 may include vehicle data 508 from the vehicle 110 connected to a charger 108 (e.g., battery type, present battery charge, battery health, battery temperature, etc.).

The IoT device 552 may transmit the vehicle data 508 collected from the chargers 108 to the network 102. The network 102 may include a central data repository 430 and software (e.g. the provider application 310) for scheduling vehicle charging. The network 102 may receive and store fleet management data 412 and weather data 414 via wireless or wired connections with the provider 104. The network 102 may include one or more of a cellular network, the Internet, Wi-Fi, Wi-Max, a proprietary provider network, a proprietary service provider network, and/or any other kind of wireless and/or wired network. The fleet management data 412 may transmit inputs to the network 102 including fleet vehicle details, fleet routes, etc. A temperature sensor and/or local weather provider may transmit weather data 414 (e.g., ambient temperature data, etc.) to the network 102. The provider application 310 may determine a charging rate/time for a vehicle 110, based on the fleet management data 412 and the weather data 414. Additionally, the communications between the network 102 and the IoT device 552 may be telemetric. In this way, the provider application 310 may utilize the vehicle data 508 collected from the chargers 108 in determining a charging rate/time for a vehicle 110 at the depot 106. The provider application 310 may be communicatively coupled with scheduling manager 422, such that the vehicle 110 specific charging rate/time determined by provider application 310 is integrated into the charging schedule created by scheduling manager 422. The charging schedule created by scheduling manager 422 should be the same or substantially similar to graph 604 and graph 606. In this way, charging priority is not set merely sequentially. Instead, the charging rate and duration are set considering the vehicle data 508 transmitted by the chargers 108, the ambient temperature data transmitted by the weather sensor 314, and the fleet management data 412 inputs.

Referring now to FIG. 4, a flow diagram of a method/process 1000 for optimizing a charging process of fleet vehicles, according to an exemplary embodiment. In some embodiments, one or more of the computing systems of FIG. 1 and FIG. 2 are configured to perform process 1000. For example, the depot 106 in combination with the depot computing system 300, may be structured to perform, at least parts thereof, the process 1000. The process 1000 may include inputs from a vehicle device, such as battery management system 510. The inputs may be communicated between computing systems via a communication interface (e.g., communication interface 512, telematics device 524) or a network (e.g., the network 202).

At process 1002, battery management system 510 detects that a state of charge is below threshold (e.g., 10%-20%), and therefore, requests a charger assignment. At process 1004, the battery management system 510 may further detect that a requesting vehicle's battery temperature is below a battery temperature threshold (e.g. below 90°F). If the state of charge and battery temperature are both below their respective thresholds, the battery management system 510 receives instructions from the provider 104 or the depot 106 to connect to a charging infrastructure (e.g., the chargers 108). In this way, the battery management system 510 aids in mitigating damage to the battery's health by ending process 1000 at process 1004 when a battery's temperature is above the battery temperature threshold. Once connected to a charger 108 at the depot 106, battery charging is initiated (i.e., process 1008).

If during the charging process, the battery management system 510 detects that the temperature of the battery has risen to exceed the temperature threshold (i.e. the process 1010) (e.g. above 90°F), the charging is paused at process 1016. When charging is paused, the vehicle 110 may remain connected to charger 108, although power is not being delivered. Alternatively, at process 1010, the depot 106 instructs the charger 108 to charge the battery 522 at a slower charging rate. In this way, the temperature's rate of increase is slowed to mitigate adverse effects on the battery health. In some embodiments, the battery management system 510 may internally cease the charging of vehicle's 110 battery. In other embodiments, the battery management system 510 may communicate via communication interface 512 to the provider computing system 400 that the battery temperature exceeds the temperature threshold. In this example, the provider computing system 400 may transmit a control signal to the depot 106 to pause charging at charger 108 in response to the temperature of the battery failing to satisfy the threshold. Upon the battery 522 returning to a temperature that satisfies the temperature threshold (e.g., due to charging being paused or slowed), the provider computing system 400 may transmit a control signal to the depot 106 to resume charging (e.g., process 1004).

In exemplary embodiments, advanced charging scheduling occurs for an entire fleet 200, as discussed in FIG. 3. In some embodiments, if process 1010 occurs and battery temperature exceeds the temperature threshold during the charging process, the vehicle is ordered to disconnect from the charger 108 (i.e. process 1016). In some embodiments, the process 1016 includes rescheduling charging of a vehicle that was ordered to disconnect when the vehicle's state of charge is still below a needed threshold of charge for use. In this way, the charging schedule of the fleet 200 is maintained even when unexpected battery temperature increases cause less efficient battery charging.

At process 1012, the state of charge of the battery 522 of the vehicle 110 is regularly calculated by battery management system 510 (e.g., continuously, nearly continuously, in predetermined intervals, etc.). If, during the process 1000, the state of charge meets or exceeds the charge threshold (e.g., a desired charge level for the vehicle 110), then battery charging ends at process 1014 (e.g., charging stops, and the charger discontinues battery charging). If the state of charge remains below the charge threshold during the process 1000, and the battery temperature remains below the temperature threshold (e.g., the process 1004), then charging continues.

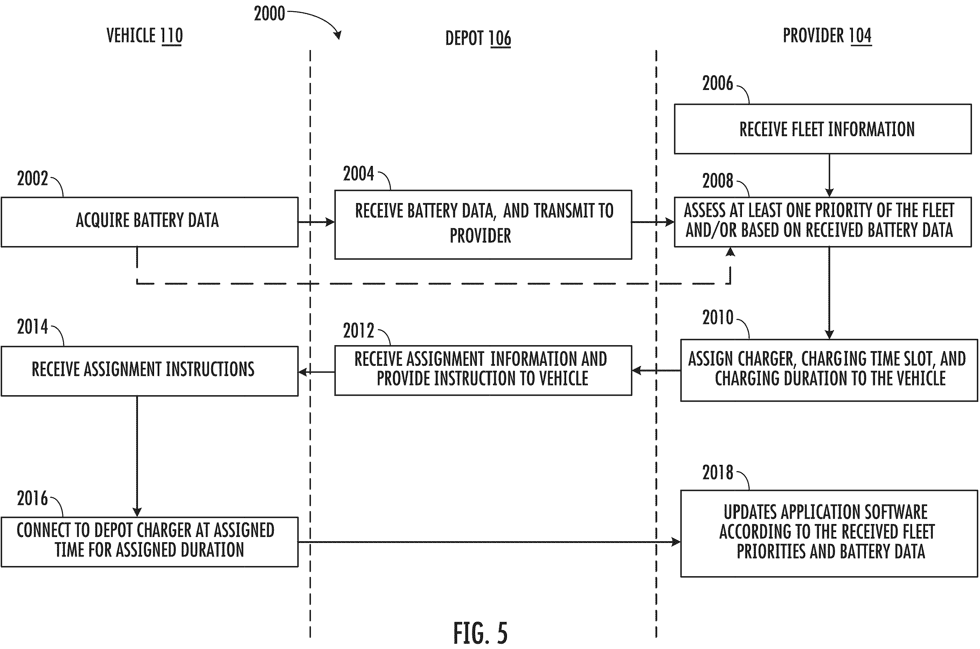

Referring now to FIG. 5, a flow chart of a charge scheduling process 2000 is shown, according to exemplary embodiments. At process 2002 the battery management system 510 acquires battery data (e.g., battery aging, charging capacity, the type of battery, battery charging rate, etc.). This occurs at the vehicle 110 level and may be performed by vehicle controller 500.

At process 2004, the depot receives the battery data from the vehicle 110. In some examples, the depot 106 may, via the depot computing system 300, compile the battery data and/or determine trends based on the battery data. The depot 106 transmits the battery data and any trends/conclusions to the provider. The depot may transmit the battery data to the provider via the network and/or directly through the communication interface 312. In some embodiments, the vehicle 110 may acquire battery data from the battery management system 510 and directly transmit the battery data to the provider 104 via the communication interface 512.

At process 2006, the provider 104 receives fleet data from a fleet operator or fleet manager. The fleet data may include vehicle routes, vehicle type, nearest time of assignment, etc.

At process 2008, the provider 104 via provider computing system 400 assesses the priorities and needs of the fleet 200. These priorities may include assessments of vehicle routes, vehicle type, nearest time of assignment, etc. At process 2010 the depot 106 assigns a charger 108, a charging time slot (e.g. begin charging at 2:00 p.m.), and/or charging duration (e.g. 3 hours) based on battery data, fleet needs, and ambient temperature. This step may occur for multiple vehicles 110 simultaneously, thereby delivering a comprehensive charging schedule to an entire fleet of vehicles. The process 2010 may also include adjusting the charging schedule, based on changes in fleet priorities, battery data, or weather data.

At process 2012, the depot 106 receives the vehicle assignment schedule from the provider 104. The depot 106 may then transmit assignment instructions to the vehicle 110. The vehicle, in turn, receives assignment instructions that include the assigned charger, charging time slot, and charging duration (e.g., process 2014).

At process 2016, the vehicle 110 may connect to a charger 108 at the assigned time and for the assigned duration. The temperature of the battery may be continuously monitored according to process 1000 (shown in FIG. 4) during charging. In this way, process 2010 may adjust the charging assignment and charging schedule when a charging vehicle's battery exceeds a temperature threshold during the charging process.

At process 2018, the provider 104 via provider computing system 400 may assess cumulative fleet data and vehicle battery health. The provider computing system 400 may use the data collected from the vehicle 110 to create updates to the charging profiles stored on the provider application 310.

As utilized herein, the terms "approximately," "about," "substantially," and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed, without restricting the scope of these features to the precise numerical ranges provided. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used here to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, mean the joining of two members directly or indirectly to one another. Such joining may be stationary (e.g., permanent or fixed) or moveable (e.g., removable or releasable). Such joining may be achieved with the two members coupled directly to each other, with the two members coupled to each other using one or more separate intervening members, or with the two members coupled to each other using an intervening member that is integrally formed as a single unitary body with one of the two members. If "coupled", or variations thereof, are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic. For example, circuit A, communicably "coupled" to circuit B, may signify that circuit A communicates directly with circuit B (i.e., no intermediary) or communicates indirectly with circuit B (e.g., through one or more intermediaries).

While various circuits with particular functionality are shown in FIGS. 1 and 2, it should be understood that the vehicle 110 and the depot computing system 300, the provider computing system 400, and the vehicle controller 500 may include any number of circuits for completing the functions described herein. For example, the activities performed by the powertrain optimization circuit 140 may be distributed into multiple circuits or combined as a single circuit. Additional circuits with additional functionality may also be included. Further, the depot computing system 300, the provider computing system 400, and the vehicle controller 500 may further control other activity beyond the scope of the present disclosure.

The processing circuits 302, 402, and 502 include a processor 304, 404, and 504, and a memory 306, 406, and 506. The memory is one or more devices (e.g., RAM, ROM, flash memory, hard disk storage) for storing data and/or computer code for completing and/or facilitating the various processes described herein. The memory is or includes non-transient volatile memory, non-volatile memory, and non-transitory computer storage media. The memory includes database components, object code components, script components, or any other type of information structure for supporting the various activities and information structures described herein. The memory is communicatively coupled to the processor and includes computer code or instructions for executing one or more processes described herein. The processor is implemented as one or more application-specific integrated circuits (ASICs), field-programmable gate arrays (FPGAs), a group of processing components, or other suitable electronic processing components. As such, the depot computing system 300, the provider computing system 400, and the vehicle controller 500 are configured to run a variety of application programs and store associated data in a network 102 and the memory.

The communication interfaces 312, 418, and 512 are structured to receive communications from and provide communications to other computing devices, users, and the like associated with the depot computing system 300, the provider computing system 400, and the vehicle controller 500. In some arrangements, the communication interfaces (i.e., communication interfaces 312, 418, and 512), include communication circuitry for facilitating the exchange of data, values, messages, etc., between the communication interfaces and the components of the various controllers (e.g. the depot computing system 300, the provider computing system 400, the vehicle controller 500). In some arrangements, the communication interfaces include machine-readable media for facilitating the exchange of information between the communication interfaces and the components of the various controllers. In some arrangements, the communication interfaces include any combination of hardware components, communication circuitry, and machine-readable media.

In some embodiments, the communication interface includes a network interface. The network interface is used to establish connections with other computing devices by way of the network 102. The network interface includes program logic that facilitates the connection of the depot computing system 300, the provider computing system 400, and the vehicle controller 500 to the network 105. In some arrangements, the network interface includes any combination of a wireless network transceiver (e.g., a cellular modem, a Bluetooth transceiver, a Wi-Fi transceiver) and/or a wired network transceiver (e.g., an Ethernet transceiver). For example, the communication interface includes an Ethernet device, such as an Ethernet card, and machine-readable media, such as an Ethernet driver configured to facilitate connections with the network 102. In some arrangements, the network interface includes the hardware and machine-readable media sufficient to support communication over multiple channels of data communication. Further, in some arrangements, the network interface includes cryptography capabilities to establish a secure or relatively secure communication session in which data communicated over the session is encrypted. Accordingly, the depot computing system 300, the provider computing system 400, and the vehicle controller 500 may be structured to facilitate encrypting and decrypting data sent to and from the depot computing system 300, the provider computing system 400, and the vehicle controller 500. For example, the depot computing system 300, the provider computing system 400, and the vehicle controller 500 may be structured to encrypt data transmitted by the communication interface 312, 418, or 512 to other devices on the network 102, such as a user device.

As mentioned above, and in one configuration, the "circuits" may be implemented in machine-readable medium storing instructions (e.g., embodied as executable code) for execution by various types of processors, such as the processor 304, the processor 404, or the processor 504 of FIG. 2. Executable code may, for instance, comprise one or more physical or logical blocks of computer instructions, which may, for instance, be organized as an object, procedure, or function. Nevertheless, the executables need not be physically located together but may comprise disparate instructions stored in different locations that, when joined logically together, comprise the circuit and achieve the stated purpose for the circuit. Indeed, a circuit of computer-readable program code may be a single instruction or many instructions and may even be distributed over several different code segments, among different programs, and across several memory devices. Similarly, operational data may be identified and illustrated herein within circuits and may be embodied in any suitable form and organized within any suitable type of data structure. The operational data may be collected as a single data set, or may be distributed over different locations, including over different storage devices, and may exist, at least partially, merely as electronic signals on a system or network.

While the term "processor" is briefly defined above, the terms "processor" and "processing circuit" are meant to be broadly interpreted. In this regard, and as mentioned above, the "processor" may be implemented as one or more processors, application-specific integrated circuits (ASICs), field-programmable gate arrays (FPGAs), digital signal processors (DSPs), or other suitable electronic data processing components structured to execute instructions provided by memory. The one or more processors may take the form of a single-core processor, a multicore processor (e.g., a dual-core processor, triple-core processor, quad-core processor, etc.), a microprocessor, etc. In some embodiments, the one or more processors may be external to the apparatus, for example, the one or more processors may be a remote processor (e.g., a cloud-based processor). Alternatively, or additionally, the one or more processors may be internal and/or local to the apparatus. In this regard, a given circuit, or components thereof, may be disposed of locally (e.g., as part of a local server, a local computing system, etc.) or remotely (e.g., as part of a remote server such as a cloud-based server). To that end, a "circuit," as described herein, may include components that are distributed across one or more locations.

Embodiments within the scope of the present disclosure include program products comprising computer- or machine-readable media for carrying or having computer- or machine-executable instructions or data structures stored thereon. Such machine-readable media can be any available media that can be accessed by a computer. The computer-readable medium may be a tangible computer-readable storage medium storing the computer-readable program code. The computer-readable storage medium may be, for example, but not limited to, an electronic, magnetic, optical, electromagnetic, infrared, holographic, micromechanical, or semiconductor system, apparatus, or device, or any suitable combination of the foregoing. More specific examples of the computer-readable medium may include, but are not limited to, a portable computer diskette, a hard disk, a random access memory (RAM), a read-only memory (ROM), an erasable programmable read-only memory (EPROM or Flash memory), a portable compact disc read-only memory (CD-ROM), a digital versatile disc (DVD), an optical storage device, a magnetic storage device, a holographic storage medium, a micromechanical storage device, or any suitable combination of the foregoing. In the context of this document, a computer-readable storage medium may be any tangible medium that can contain and/or store computer-readable program code for use by and/or in connection with an instruction execution system, apparatus, or device. Machine-executable instructions include, for example, instructions and data that cause a computer or processing machine to perform a certain function or group of functions.

The computer-readable medium may also be a computer-readable signal medium. A computer-readable signal medium may include a propagated data signal with computer-readable program code embodied therein, for example, in baseband or as part of a carrier wave. Such a propagated signal may take any of a variety of forms, including, but not limited to, electrical, electro-magnetic, magnetic, optical, or any suitable combination thereof. A computer-readable signal medium may be any computer-readable medium that is not a computer-readable storage medium and that can communicate, propagate, or transport computer-readable program code for use by or in connection with an instruction execution system, apparatus, or device. Computer-readable program code embodied on a computer-readable signal medium may be transmitted using any appropriate medium, including but not limited to, wireless, wireline, optical fiber cable, Radio Frequency (RF), or the like, or any suitable combination of the foregoing.

In one embodiment, the computer-readable medium may comprise a combination of one or more computer-readable storage mediums and one or more computer-readable signal mediums. For example, computer-readable program code may be both propagated as an electromagnetic signal through a fiber optic cable for execution by a processor and stored on a RAM storage device for execution by the processor.

Computer-readable program code for carrying out operations for aspects of the present disclosure may be written in any combination of one or more other programming languages, including an object-oriented programming language such as Java, Smalltalk, C++, or the like, and conventional procedural programming languages, such as the "C" programming language or similar programming languages. The computer-readable program code may execute entirely on the user's computer, partly on the user's computer as a stand-alone computer-readable package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The program code may also be stored in a computer-readable medium that can direct a computer, other programmable data processing apparatus, or other devices to function in a particular manner, such that the instructions stored in the computer-readable medium produce an article of manufacture, including instructions, which implement the function/act specified in the schematic flowchart diagrams and/or schematic block diagrams block or blocks.

Although the figures and description may illustrate a specific order of method steps, the order of such steps may differ from what is depicted and described unless specified differently above. Also, two or more steps may be performed concurrently or with partial concurrence, unless specified differently above. Such variation may depend, for example, on the software and hardware systems chosen and on designer choice. All such variations are within the scope of the disclosure. Likewise, software implementations of the described methods could be accomplished with standard programming techniques with rule-based logic and other logic to accomplish the various connection steps, processing steps, comparison steps, and decision steps.

It is important to note that the construction and arrangement of the apparatus and system, as shown in the various exemplary embodiments, are illustrative only. Additionally, any element disclosed in one embodiment may be incorporated or utilized with any other embodiment disclosed herein.

## Claims

1. A provider computing system structured to determine and implement equipment charging schedules, the provider computing system comprising:
   at least one processing circuit comprising at least one memory coupled to at least one processor, the at least one processing circuit coupled to an equipment charging depot comprising a plurality of equipment chargers, wherein the at least one memory stores instructions therein that, when executed by the at least one processor, causes the at least one processing circuit to perform operations including:

   receiving an equipment charging request from a piece of equipment;
   receiving data regarding the piece of equipment, the data regarding the piece of equipment received from at least one of the piece of the equipment or a computing system associated with the equipment charging depot;
   receiving at least one fleet priority value associated with a fleet of equipment, the fleet of equipment including the piece of equipment;
   determining a charging parameter for the piece of equipment based on the data regarding the piece of equipment and the at least one fleet priority value;
   receiving an indication of a charging connection between the piece of equipment and a charger at the equipment charging depot;
   receiving information via the charging connection subsequent to the indication; and
   adjusting the charging parameter based on the received information via the charging connection.

2. The provider computing system of claim 1, wherein the data regarding the piece of equipment includes at least one of: a battery capacity; a battery size; battery health data; a battery charge rate; a battery type; or a battery temperature.

3. The provider computing system of claim 2, wherein the at least one memory stores instructions therein that, when executed by the at least one processor, further causes the at least one processing circuit to perform operations including:

   assessing the at least one of the battery health data, the battery type, or the battery temperature;
   determining a temperature threshold for a battery of the piece of equipment based on the at least one of the battery health data, the battery type, or the battery temperature;
   operating the charger of the equipment charging depot to pause a charging of the battery of the piece of equipment in response to a temperature of the battery of the piece of equipment being greater than or equal to the temperature threshold for the battery; and
   operating the charger of the equipment charging depot to resume charging in response to the temperature of the battery of the piece of equipment being below the temperature threshold.

4. The provider computing system of claim 1, wherein the charging parameter is tracked over time to generate a charging power profile.

5. The provider computing system of claim 1 wherein the data regarding the piece of equipment includes state of charge (SOC) of a battery of the piece of equipment, and wherein the at least one memory stores instructions therein that, when executed by the at least one processor, further causes the at least one processing circuit to perform operations including:

receiving an SOC threshold for the battery; and
transmitting a control signal to the equipment charging depot to stop a charging of the battery in response to the SOC of the battery satisfying the SOC threshold.

6. The provider computing system of claim 1, wherein the at least one memory stores instructions therein that, when executed by the at least one processor, further causes the at least one processing circuit to perform operations including:

receiving utility data from a local utility provider associated with the charging depot; and
determine the charging parameter for the piece of equipment based at least partially on the received utility data.

7. The provider computing system of claim 6, wherein the utility data includes a total power available to the equipment charging depot associated with the provider computing system.

8. A system for charging vehicle fleets, comprising:

a plurality of chargers communicatively coupled to a network; and
a controller including one or more processors and one or more memory devices storing instructions that, when executed by the one or more processors, cause the one or more processors to perform operations comprising:

receiving a charging request from a fleet of vehicles;
receiving data regarding the fleet of vehicles via the network;
receiving, from at least one temperature sensor via the network, an ambient temperature associated with the plurality of chargers;
receiving fleet management data that includes at least one charging priority via the network;
receiving, from a power grid utilized by the plurality of chargers, a maximum power demand for the power grid;
determining a charging schedule for the fleet of vehicles based on the maximum power demand, the at least one charging priority, and the ambient temperature;
communicating a charging time and a charging duration to each vehicle of the fleet of vehicles based on the determined charging schedule; and
operating a charger of the plurality of chargers according to the charging time and the charging duration specific to each vehicle in the fleet of vehicles.

9. The system for charging vehicle fleets of Claim 8, wherein the at least one charging priority for fleet vehicle charging is based on at least one of a route for each vehicle in the fleet of vehicles or a scheduled departure time for each vehicle in the fleet of vehicles from an area associated with the plurality of chargers.

10. The system for charging vehicle fleets of Claim 9, wherein the vehicle in the fleet of vehicles with a longest route relative to other vehicles in the fleet of vehicles is scheduled for a longer charging time than vehicles with a shorter route.

11. The system for charging vehicle fleets of Claim 8, wherein

(a) the determined charging schedule for the fleet of vehicles includes at least one vehicle scheduled to be charged to a value less than a maximum charge value of the vehicle, or
(b) wherein the charging request further comprises a charging time window and a minimum end state of charge value, or
(c) the one or more memory devices store instructions that, when executed by the one or more processors, cause the one or more processors to perform operations further comprising receiving, from the power grid utilized by the plurality of chargers, a total power available to the plurality of chargers, and/or a regulation signal that defines a maximum power grid capacity.

12. A method for generating and implementing a charging schedule for a fleet of vehicles, comprising:

receiving a charging request from the fleet of vehicles;
receiving battery data associated with batteries of the fleet of vehicles;
receiving fleet management data that includes at least one charging priority associated with the fleet of vehicles;
determining a charging schedule for the fleet of vehicles based on the battery data and the at least one charging priority, the charging schedule including a charging assignment for each vehicle in the fleet of vehicles;
transmitting the charging assignment to the fleet of vehicles; and
transmitting a control signal to a charging depot to operate a plurality of chargers according to the charging schedule.

13. The method of claim 12, further comprising:

(a) receiving an ambient temperature associated with the plurality of chargers; and
determining the charging schedule for the fleet of vehicles based at least partially on the ambient temperature, and/or
(b) receiving a power demand threshold for a power grid associated with the charging depot; and
determining the charging schedule for the fleet of vehicles based at least partially on the power demand threshold, and/or
(c) receiving one or more electricity rates for the power grid associated with the charging depot; and
determining the charging schedule for the fleet of vehicles based at least partially on the one or more electricity rates.

14. The method of claim 12, further comprising:

receiving a temperature threshold for each battery of the batteries of the fleet of vehicles;
transmitting a control signal to the charging depot to pause charging of a battery of the batteries in response to the temperature of the battery failing to satisfy the temperature threshold; and
modifying the charging schedule for the fleet of vehicles based on a duration of the paused charging, and/or

wherein the charging request further comprises a charging time window and a minimum end state of charge value for each battery in the batteries.

FIG. 1

EP 4 606 637 A2

**PROVIDER 104**

**PROVIDER COMPUTING SYSTEM 400**

**PROCESSING CIRCUIT 402**

| PROCESSOR 404 | MEMORY 406 |

**DATABASE 410**

FLEET MANAGEMENT DATA 412

WEATHER DATA 414

PRICING DATA 416

COMMUNICATION INTERFACE 418

APPLICATION MANAGER 420

SCHEDULING MANAGER 422

102

NETWORK

**DEPOT 106**

**DEPOT COMPUTING SYSTEM 300**

**PROCESSING CIRCUIT 302**

PROCESSOR 304

**MEMORY 306**

DEPOT CHARGER DATA 308

PROVIDER APPLICATION 310

COMMUNICATION INTERFACE 312

**VEHICLE 110**

**CONTROLLER 500**

**PROCESSING CIRCUIT 502**

PROCESSOR 504

**MEMORY 506**

VEHICLE DATA 508

BATTERY MANAGEMENT SYSTEM 510

COMMUNICATION INTERFACE 512

ENGINE 514

ELECTRIC MOTIVE DEVICE 516

INPUT/OUTPUT DEVICE 518

SENSORS 520

BATTERY 522

TELEMATICS DEVICE 524

FIG. 2

FIG. 3

1000

```
                    ┌─────────────────────┐ 1002
                    │  STATE OF CHARGE <  │
                    │      THRESHOLD      │
                    └─────────────────────┘
                              │
                    ┌─────────────────────┐ 1004
                    │ BATTERY TEMP < THRESHOLD │
                    └─────────────────────┘
                              │
                    ┌─────────────────────┐ 1006
                    │ BATTERY MANAGEMENT  │
                    │ SYSTEM CONNECTS TO DEPOT │
                    │       CHARGER       │
                    └─────────────────────┘
                              │
                    ┌─────────────────────┐ 1008
                    │ INITIATE BATTERY CHARGING │
                    │ ACCORDING TO SCHEDULE AND │
                    │      PARAMETERS     │
                    └─────────────────────┘
                              │
    1010                                              YES
                    ┌─────────────────────┐         ┌──────────────────────┐
                    │ BATTERY TEMP > THRESHOLD │──── │ ALTER CHARGING SCHEDULE │
                    └─────────────────────┘         │  AND/OR PARAMETERS    │
                              │ NO                   └──────────────────────┘
    NO              ┌─────────────────────┐ 1012              1016
                    │  STATE OF CHARGE  > │
                    │      THRESHOLD      │
                    └─────────────────────┘
                              │ YES
                    ┌─────────────────────┐ 1014
                    │ DISCONTINUE BATTERY │
                    │      CHARGING       │
                    └─────────────────────┘
```

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63555866